Europäisches Patentamt

European Patent Office

Office européen des brevets

(11) Veröffentlichungsnummer: **0 230 568**

**A2**

(12) **EUROPÄISCHE PATENTANMELDUNG**

(21) Anmeldenummer: 86116746.8

(22) Anmeldetag: 02.12.86

(51) Int. Cl.⁴: **H02M 7/525**

(30) Priorität: 18.01.86 DE 3601375

(43) Veröffentlichungstag der Anmeldung:
05.08.87 Patentblatt 87/32

(84) Benannte Vertragsstaaten:
**DE GB NL**

(71) Anmelder: **BROWN, BOVERI & CIE**
**Aktiengesellschaft**
**Kallstadter Strasse 1**
**D-6800 Mannheim 31(DE)**

(72) Erfinder: **Amelunxen, Bernd, Dipl.-Ing.**
**Mendelssohnstrasse 5**
**D-6520 Worms-Pfeddersheim(DE)**

(74) Vertreter: **Kempe, Wolfgang, Dr. et al**
**c/o BROWN, BOVERI & CIE AG ZPT Postfach**
**351**
**D-6800 Mannheim 31(DE)**

(54) **Wechselrichter mit Induktivitäten zur Begrenzung der Stromanstiegs- bzw. -abfallgeschwindigkeit.**

(57) Bei diesem Wechselrichter (4) sind in Reihe zu jedem steuerbaren Schaltelement (12 bis 17) Induktivitäten (6 bis 11) geschaltet, um die Stromanstiegs- bzw. -abfallgeschwindigkeit zu begrenzen. Je Phase liegen zwei steuerbare Schaltelemente (12 bis 17) in Reihe zwischen den Gleichspannungszuführungen - (2,3). Der Verbraucher (5) ist an die gemeinsamen Verbindungspunkte (24 bis 26) von je zwei Schaltelementen (12 bis 17) angeschlossen. Um die infolge Selbstinduktion der Induktivitäten (6 bis 11) erzeugten Spannungsüberhöhungen vom Verbraucher (5) fernzuhalten, sind die Verbraucheranschlüsse (28 bis 30) je Phase über zwei in Sperrichtung geschaltete Ventile (34 bis 39, 41 bis 46) mit den Gleichspannungszuführungen (2,3) verbunden. Zur Aufnahme der bei der Spannungsbegrenzung auftretenden Spannungen sind zusätzliche Induktivitäten (31 bis 33) zwischen den Verbraucheranschlüssen (28 bis 30) und den gemeinsamen Verbindungspunkten (24 bis 26) von je zwei steuerbaren Schaltelementen (12 bis 17) geschaltet. Die Erfindung wird vorwiegend bei Zwischenkreisumrichtern eingesetzt.

## Wechselrichter mit Induktivitäten zur Begrenzung der Stromanstiegs-bzw. -abfallgeschwindigkeit

Die Erfindung bezieht sich auf einen Wechselrichter mit Induktivitäten zur Begrenzung der Stromanstiegs-bzw. -abfallgeschwindigkeit gemäß dem Oberbegriff des Anspruchs 1.

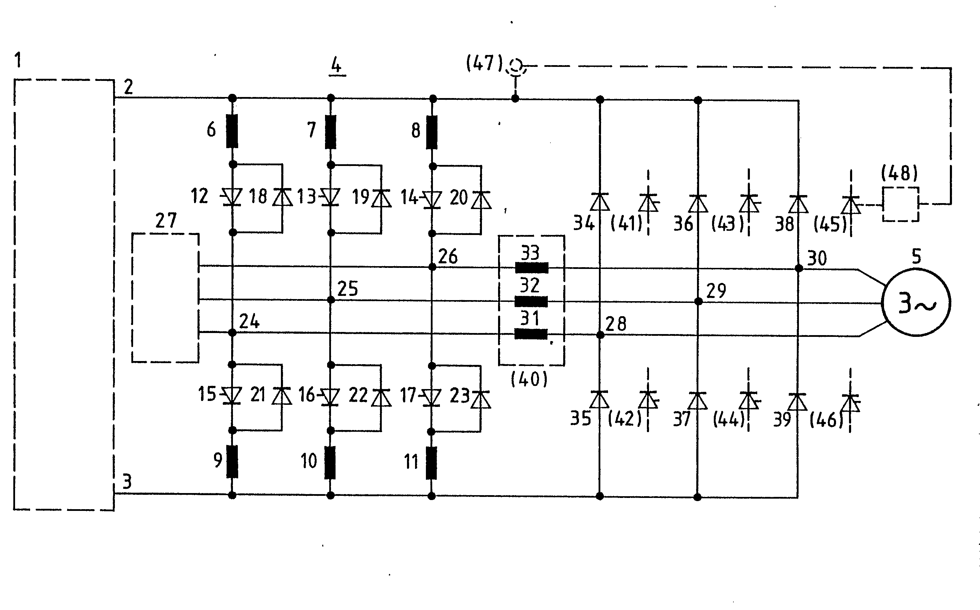

Ein solcher Wechselrichter mit Induktivitäten zur Begrenzung der Stromanstiegs-bzw. -abfallgeschwindigkeit ist beispielsweise aus I.J.Arnold... Elektronische Bauelemente und Schaltungen der Energietechnik: von der μp-Technik bis zur Leistungseleketronik, VDE-Verlag, Berlin, Offenbach, 1984, Seite 270 bis 275, insbesondere Seite 273, Bild 17.11 "Pulswechselrichter mit Thyristoren" bekannt. Im bekannten Fall handelt es sich um einen U-Umrichter, dessen Wechselrichter an zwei Zwischenkreissammelschienen mit konstanter Zwischenkreisspannung angeschlossen ist. In Reihe mit den Schaltelementen des Wechselrichters sind Induktivitäten zur Begrenzung des Stromanstiegs und Stromabfalls beim Kommutieren des Ausgangsstromes von der einen Zwischenkreissammelschiene auf die andere vorgesehen. Die durch Selbstinduktion erzeugten Spannungen an diesen Induktivitäten, die z.B. bei Beanspruchung durch einen Löschkreis hervorgerufen werden, erscheinen als zusätzliche Spannungen in der Wechselrichter-Ausgangspannung, bewirken dadurch eine Spannungserhöhung über den Wert der Zwischenkreisspannung hinaus und können sich deshalb bei spannungsempfindlichen Verbrauchern nachteilig auswirken.

Der Erfindung liegt davon ausgehend die Aufgabe zugrunde, einen Wechselrichter mit Induktivitäten zur Begrenzung der Stromanstiegs-bzw. -abfallgeschwindigkeit der eingangs genannten Art anzugeben, der auch für spannungsempfindliche Verbraucher geeignet ist.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbeondere darin, daß die Ausgangsspannung des Wechselrichters nach oben auf den Wert der dem Wechselrichter eingangsseitig zugeführten Gleichspannung begrenzt wird, ohne daß als Folge der Begrenzung unzulässig hohe Ströme erzeugt werden.

Vorteilhafte Ausgestaltungen der Erfindung sind in den Unteransprüchen gekennzeichnet.

Die Erfindung wird nachstehend anhand der in der Zeichnung dargestellten Ausführungsformen erläutert. In der Figur ist ein Gleichspannungszwischenkreis 1 mit einer ersten (positiven) bzw. zweiten (negativen) Zwischenkreissammelschiene 2 bzw. 3 als Gleichspannungszuführungen zu erkennen. An die beiden Schienen 2, 3 ist ein Wechselrichter 4 angeschlossen, der einen ausgangsseitigen Verbraucher 5 speist. Mit den Zwischenkreissammelschienen 2 bzw. 3 sind je drei Induktivitäten 6, 7, 8 bzw. 9, 10, 11 des Wechselrichters 4 verbunden.

Die Induktivitäten 6 bzw. 7 bzw. 8 sind andererseits an die Anoden der Hauptthyristoren 12 bzw. 13 bzw. 14 des Wechselrichters 4 angeschlossen, während die Drosseln 9 bzw. 10 bzw. 11 andererseits mit den Kathoden der Hauptthyristoren 15 bzw. 16 bzw. 17 des Wechselrichters 4 verbunden sind. Anstelle der Thyristoren sind auch andere Bauelemente als steuerbare Schaltelemente des Wechselrichters einsetzbar. Die Induktivitäten 6 bis 1 dienen zur Begrenzung des Stromanstieges bzw. Stromabfalles der Thyristorströme.

Jedem Thyristor 12 bis 17 ist jeweils eine Diode 18 bis 23 antiparallel geschaltet.

Die Kathoden der Thyristoren 12 bzw. 13 bzw. 14 sind jeweils mit den Anoden der Thyristoren 15 bzw. 16 bzw. 17 verbunden, wodurch Wechselspannungsausgänge 24 bzw. 25 bzw. 26 an den jeweils gemeinsamen Verbindungspunkten gebildet werden. An die Wechselspannungsausgänge 24 bis 26 ist eine Löscheinrichtung 27 des Wechselrichters 4 angeschlossen.

Die Verbraucheranschlüsse 28 bzw. 29 bzw. 30 des dreiphasigen Verbrauchers 5 (z.B. Motor) sind jeweils über zusätzliche Induktivitäten 31 bzw. 32 bzw. 33 mit den Wechselspannungsausgängen 24 bzw. 25 bzw. 26 des Wechselrichters 4 verbunden. Die Verbraucheranschlüsse 28 bzw. 29 bzw. 30 sind desweiteren über Dioden 34 bzw. 36 bzw. 38 an die Zwischenkreissammelschiene 2 und über Dioden 35 bzw. 37 bzw. 39 an die Zwischenkreissammelschiene 3 angeschlossen, wobei die Dioden 34, 36, 38 jeweils mit ihren Kathoden an der ersten Zwischenkreissammelschiene 2 und die Dioden 35, 37, 39 jeweils mit ihren Anoden an der zweiten Zwischenkreissamelschiene 3 liegen.

Die je Phase paarweise gleichsinnig in Reihe geschalteten und in Sperrichtung mit den Zwischenkreissammelschienen verbundenen Dioden 34 bis 39 verhindern, daß die dem Verbraucher 5 zugeführte Spannung höher als die Spannung des Gleichspannungszwischenkreises ist. Die Differenzspannungen zwischen den an den Wechselspannungsausgängen 24 bis 26 anstehenden Spannungen und den Spannungen an den Verbraucheranschlüssen 28 bis 30, die die Zwischenkreisspannung überschreiten, werden von den zusätzlichen Induktivitäten 31 bis 33 aufgenommen. Damit dienen die in Reihe zum Verbraucher 5 je Phase angeordneten zusätzlichen Induktivitäten 31 bis 33 insbesondere zur Aufnahme der von den Induktivitäten 6 bis 11 durch Selbstinduktion erzeugten zusätzlichen Spannungen. Die Dimensionierung der Induktivitäten 31 bis 33 und Dioden 34 bis 39 erfolgt deshalb hauptsächlich unter Berücksichtigung der Drosseln 6 bis 11.

Bei alleinigem Anschluß der Dioden 34 bis 39 an die Verbraucheranschlüsse 28 bis 30 ohne gleichzeitige Anordnung der zusätzlichen Induktivitäten 31 bis 33 würden sich unzulässig hohe Kurzschlußströme im Wechselrichter 4 ergeben, so daß die Dioden 34 bis 39 und die zusätzlichen Induktivitäten 31 bis 33 stets gemeinsam einzusetzen sind.

Bei einer ersten Ausführungsvariante der Erfindung sind die drei Induktivitäten 31 bis 33 nicht als getrennte Einheiten ausgeführt, sondern zu einer gemeinsamen Baueinheit 40 zusammengefaßt. Dies hat den Vorteil eines kompakten, platzsparenden Aufbaues.

Gemäß einer zweiten Ausführungsvariante der Erfindung können die Dioden 34 bis 39 durch steuerbare Ventile 41 bis 46, insbesondere Thyristoren, ersetzt werden. Dies ist beispielsweise ratsam, wenn die Spannung des Gleichspannungszwischenkreises nicht fest, sondern variabel ist. In diesem Fall werden die steuerbaren Ventile 41 bis 46 erst mit Zündimpulsen versorgt, wenn die Summenspannung aus Zwischenkreisspannung und zusätzlicher induktiver Spannung der Induktivitäten 6 bis 11 den Wert der maximal zulässigen Verbraucherspannung erreicht bzw. überschreitet, d.h. bei verhältnismäßig hoher Zwischenkreisspanung. Bei relativ kleiner Zwischenkreisspannung jedoch besteht keine Gefahr, daß die Summenspannung aus Zwischenkreisspannung und induktiver Spannung der Induktivitäten 6 bis 11 die erlaubte Verbraucherspannung überschreitet, so daß es sich bei diesem Betriebsfall erübrigt, die Ventile 41 bis 46 anzusteuern.

Zur Ermittlung der Zwischenkreisspannung kann bei der zweiten Ausführungsvariante eine Spannungserfassungseinrichtung 47 vorgesehen sein. Eine Auswerte-und Zündeinrichtung 48 dient zur Auswertung der erfaßten Zwischenkreisspannung und zur Versorgung der steuerbaren Ventile 41 bis 46 mit Zündimpulsen bei relativ hoher Zwischenkreisspannung.

## Ansprüche

1. Wechselrichter mit zwei je Ausgangsphase in Reihe zwischen den Gleichspannungszuführungen liegenden steuerbaren Schaltelementen, denen jeweils eine Induktitivät zur Begrenzung der Stromanstiegs-bzw. Stromabfallgeschwindigkeit in Reihe geschaltet ist und an deren gemeinsamen Verbindungspunkten ein Verbraucher angeschlossen ist, dadurch gekennzeichnet, daß zwischen den gemeinsamen Verbindungspunkten (24 bis 26) von je zwei steuerbaren Schaltelementen (12 bis 17) und den Verbraucheranschlüssen (28 bis 30) in Reihe zum Verbraucher - (5) je Phase eine zusätzliche Induktivität (31 bis 33) geschaltet ist und daß die Verbraucheranschlüsse (28 bis 30) je Phase über zwei in Sperrichtung geschaltete Ventile (34 bis 39, 41 bis 46) mit den Gleichspannungszuführungen (2,3) verbunden sind.

2. Wechselrichter nach Anspruch 1, dadurch gekennzeichnet, daß die an den Verbraucheranschlüssen (28 bis 30) liegenden Ventile als Dioden (34 bis 39) ausgeführt sind.

3. Wechselrichter nach Anspruch 1, dadurch gekennzeichnet, daß die an den Verbraucheranschlüssen (28 bis 30) liegenden Ventile als steuerbare Ventile (41 bis 46) ausgeführt sind.

4. Wechselrichter nach einem der Ansprüche 1 bis 3, dadurch gekennzeichnet, daß die zusätzlichen Induktivitäten (31 bis 33) zu einer gemeinsamen Baueinheit (40) zusammengefaßt sind.

5. Wechselrichter nach einem der Ansprüche 1 bis 4, dadurch gekennzeichnet, daß die jeweils in Reihe liegenden steuerbaren Schaltelemente (12 bis 17) und Induktivitäten (6 bis 11) in der Folge derReihenschaltung vertauscht sind.

0 230 568